# EUROPEAN PATENT APPLICATION

(11) **EP 4 664 329 A1**
(43) Date of publication of application: **17.12.2025**
(21) Application number: 25182843.0
(22) Date of filing: 13.06.2025
(51) Int. Cl.: G06F 21/31, H04W 12/67, H04L 9/40, G06N 20/00

(54) **SYSTEMS AND METHODS FOR SECURING LOGIN AUTHENTICATION**

(30) Priority: 14.06.2024 US 202463660160 P; 12.06.2025 US 202519235779
(71) Applicant: JPMorgan Chase Bank, N.A., New York, NY 10179 (US)
(72) Inventor: KRISHNAGI, Kumar Rao, New York, 10179 (US); PERLA, Vijay Kumar, New York, 10179 (US); NAGARAJAN, Sivakumar, New York, 10179 (US); NAGARAJAN, Balaguru, New York, 10179 (US); BANALA, Sandeep Reddy, New York, 10179 (US); WITTHOFT, Gustav, New York, 10179 (US); LONCARIC, Goran, New York, 10179 (US); ARASAN, Durai, New York, 10179 (US)
(74) Representative: Patentanwälte Olbricht Buchhold Keulertz

(57) **Abstract**

Systems and methods for securing login authentication are disclosed. In one embodiment, a method may include: (1) receiving, by a mobile application executed by a mobile electronic device, a login from a user; (2) determining, by the mobile application, that secure login authentication is required; (3) prompting, by the mobile application, the user for additional authentication information comprising a personal identification number or a passcode; (4) receiving, by the mobile application, the additional authentication information; (5) comparing, by the mobile application, the additional authentication information to stored authentication information; and (6) presenting, by the mobile application, a landing screen in response to the additional authentication information matching the stored authentication information.

## Description

### RELATED APPLICATIONS

This application claims priority to, and the benefit of, U.S. Provisional Patent Application Ser. No. 63/660,160 filed June 14, 2024, the disclosure of which is hereby incorporated, by reference, in its entirety.

### BACKGROUND OF THE INVENTION

### 1. Field of the Invention

Embodiments relate to systems and methods for securing login authentication.

### 2. Description of the Related Art

People often lose control of their phones in public spaces, providing an opportunity for fraudsters to exploit login authentication in order to steal money, change passwords, or take other undesirable actions.

### SUMMARY OF THE INVENTION

Systems and methods for securing login authentication are disclosed. In one embodiment, a method may include: (1) receiving, by a mobile application executed by a mobile electronic device, a login from a user; (2) determining, by the mobile application, that secure login authentication is required; (3) prompting, by the mobile application, the user for additional authentication information comprising a personal identification number or a passcode; (4) receiving, by the mobile application, the additional authentication information; (5) comparing, by the mobile application, the additional authentication information to stored authentication information; and (6) presenting, by the mobile application, a landing screen in response to the additional authentication information matching the stored authentication information.

In one embodiment, the login may include a username and password login.

In one embodiment, the login may include a biometric login.

In one embodiment, the step of determining that additional authentication is required may include: determining, by the mobile application, that additional authentication is in an always-on mode.

In one embodiment, the step of determining that additional authentication is required may include: determining, by the mobile application, a risk score for the login; and determining, by the mobile application, that the additional authentication is required in response to the risk score being above a threshold.

In one embodiment, the mobile application may use a machine learning model to predict the risk score.

In one embodiment, the risk score may be based on a geolocation of the mobile electronic device, historical user activity with the mobile electronic device, a type of login, a number of failed login attempts, a time of day, and/or a use of a public network.

In one embodiment, the secure login authentication may be required when the mobile electronic device is outside of a registered area.

In one embodiment, the secure login authentication may be required in response to a request for a transaction above a threshold amount.

In one embodiment, the method may also include: receiving, by the mobile application, authentication information; and storing, by the mobile application, the authentication information as stored authentication information.

According to another embodiment, a non-transitory computer readable storage medium may include instructions stored thereon, which when read and executed by one or more computer processors, cause the one or more computer processors to perform steps comprising: receiving a login from a user; determining that secure login authentication is required; prompting the user for additional authentication information comprising a personal identification number or a passcode; receiving the additional authentication information; comparing the additional authentication information to stored authentication information; and presenting a landing screen in response to the additional authentication information matching the stored authentication information.

In one embodiment, the login may include a username and password login.

In one embodiment, the login may include a biometric login.

In one embodiment, the step of determining that secure login authentication is required may include instructions stored thereon, which when read and executed by the one or more computer processors, cause the one or more computer processors to perform steps including: determining that additional authentication is in an always-on mode.

In one embodiment, the step of determining that secure login authentication is required may include instructions stored thereon, which when read and executed by the one or more computer processors, cause the one or more computer processors to perform steps including: determining a risk score for the login; and determining that the secure login authentication is required in response to the risk score being above a threshold.

In one embodiment, a machine learning model may be used to predict the risk score.

In one embodiment, the risk score may be based on a geolocation of a mobile electronic device, historical user activity with the mobile electronic device, a type of login, a number of failed login attempts, a time of day, and/or a use of a public network.

In one embodiment, the secure login authentication is required when the mobile electronic device is outside of a registered area.

In one embodiment, the secure login authentication is required in response to a request for a transaction above a threshold amount.

In one embodiment, the non-transitory computer readable storage medium may also include instructions stored thereon, which when read and executed by the one or more computer processors, cause the one or more computer processors to perform steps including: receiving authentication information; and storing the authentication information as stored authentication information.

### BRIEF DESCRIPTION OF THE DRAWINGS

For a more complete understanding of the present invention, the objects, and advantages thereof, reference is now made to the following descriptions taken in connection with the accompanying drawings in which:
Figure 1 illustrates a system for securing login authentication according to an embodiment;
Figure 2 illustrates a method for registering authentication information to secure login authentication according to an embodiment;
Figure 3 depicts a method for securing login authentication according to an embodiment; and
Figure 4 depicts an exemplary computing system for implementing aspects of the present disclosure.

### DETAILED DESCRIPTION OF PREFERRED EMBODIMENTS

Systems and methods for securing login authentication are disclosed.

Embodiments may enhance mobile device and/or application security by implementing additional authentication, such entry of a personal identification number (PIN) or an alphanumeric passcode, in addition to login authentication, such as a username and password, or a biometric.

In embodiments, the additional authentication may be required when a machine learning model determines that there is risk of unauthorized access to an application, the operating system, etc.

In one embodiment, the machine learning model may be stored on the user's electronic device, or it may be provided by the backend for an application, such as a financial institution backend.

In one embodiment, the custom authentication information may be stored in the mobile electronic device (e.g., a keychain), or may be stored by a backend.

The machine learning model may be trained with historical user activity, such as geolocation, login attempts, failed logins, time of day, use of public WiFi, etc. If the machine learning model determines that there is a risk of unauthorized login, the machine learning model may require entry of the PIN.

In one embodiment, the user may be able to utter a phrase, such as "turn on secured login" or similar, and the application and/or operating system may turn on the secured login if not already active. In another embodiment, a gesture may be used to turn on the secured login if not already active.

In one embodiment, secured login authentication may be required if the user is not located in a registered location, such as a "safe space." Examples of space spaces are disclosed in U.S. Provisional Patent Application Ser. No. 63/640,073, the disclosure of which is hereby incorporated, by reference, in its entirety.

In one embodiment, the operating system may be enhanced to include secured login, such that the user will not be able to access applications on the user's mobile electronic device until the user provides both a login (e.g., username/password or biometric) and the authentication information.

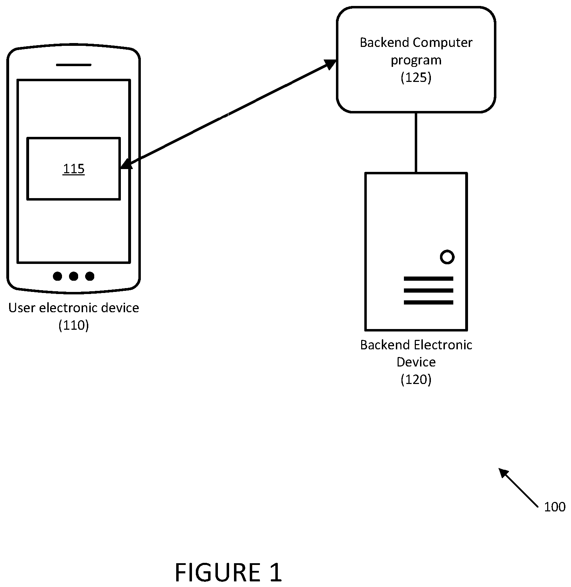

Referring to Figure 1, a system for securing login authentication is disclosed according to an embodiment. System 100 may include user electronic device 110, which may be a computer (e.g., workstation, desktop, laptop, notebook, tablet, etc.), a smart device (e.g., smart phone, smart watch, etc.), an Internet of Things (IoT) appliance, etc. User electronic device 110 may execute application 115, which may be a mobile application provided by an entity, such as a financial institution, merchant, etc.

Application 115 may interface with backend computer program 125, which may provide backend service for application 115. Backend computer program 125 may be executed by backend electronic device 120, which may be a server (e.g., cloud-based and/or physical), a computer, etc.

In one embodiment, application 115 may perform methods to secure login authentication with additional authentication; in another embodiment, application 115 and backend computer program 125 may together perform methods to secure login authentication.

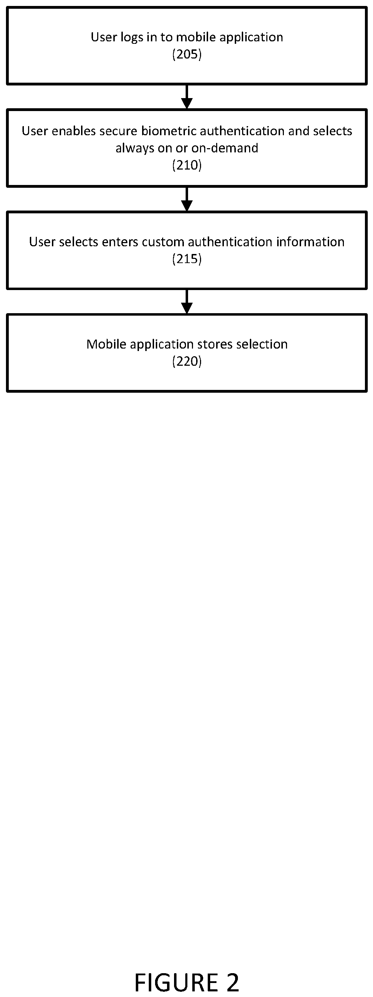

Referring to Figure 2, a method for registering authentication information to secure login authentication is disclosed according to an embodiment.

In step 205, a user may log in to an application, such as a mobile application. In one embodiment, the user may log in using a username and password, a passkey, biometrics, etc.

In one embodiment, the user may also log in to an account using a browser.

In step 210, once logged in, the user may secure login authentication, and may optionally selects whether the secure login authentication as being always-on or on-demand. With always-on secure login authentication, the user will be prompted for secure login authentication every time the user logs in to the application.

The user may also request secure login authentication when certain parameters are met, such as a high dollar transaction, a change of account password or contact information, etc. The parameters may be configurable and set by the user.

In step 215, the user may select to use custom authentication information for secure login authentication, and the user may provide a PIN or passcode. The PIN or passcode may include numbers and/or letters, shapes, gestures, patterns, etc., and the length may be set by the entity (e.g., 8 digits/characters) or may be configurable by the user.

In step 220, the application may store the user selections, including the entered custom authentication information. In one embodiment, the application may provide the user selections to a backend computer program, such as a backend for the application.

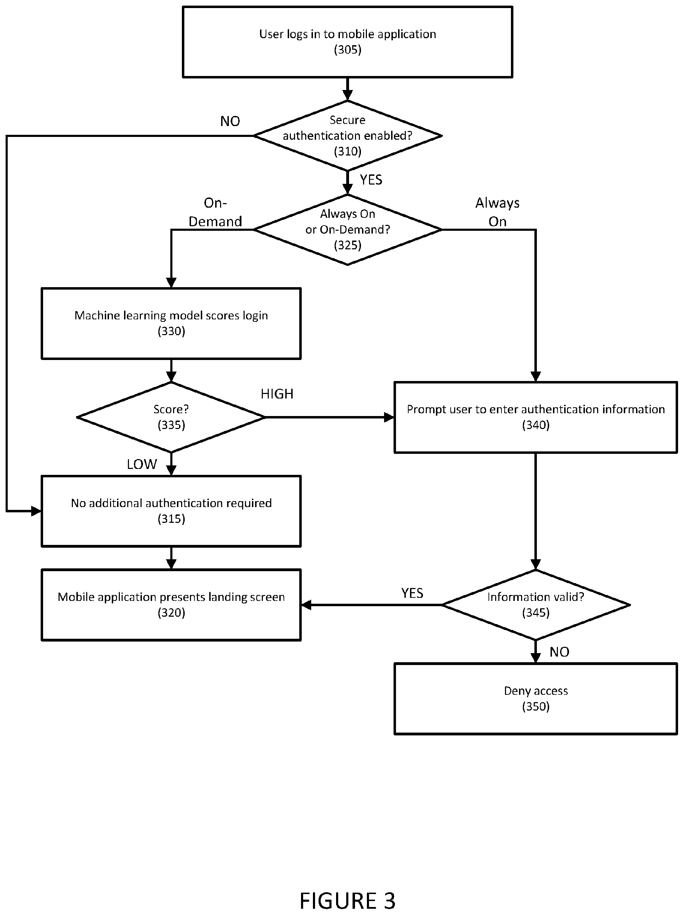

Referring to Figure 3, a method for securing login authentication is disclosed according to an embodiment.

In step 305, the user may log in to a mobile application, and in step 310, the mobile application may check to see if secure login authentication has been enabled. If it has not been enabled, in step 315, no additional authentication is required and, in step 320, the user may be presented with the landing page for the mobile application.

If secure login authentication is enabled, in step 325, the mobile application may determine whether the secure login authentication is on-demand or always-on. For example, the mobile application may retrieve the user's selection from memory, or from a backend computer program for the mobile application.

If the secure login authentication is set to on-demand, in step 330, a machine learning model may score the login to predict whether additional authentication is required. The machine learning model may be trained with historical user activity, such as geolocation, login attempts, failed logins, time of day, use of public WiFi, etc. Based on the current login information, the machine learning model may score the login as, for example, high risk or low risk.

In step 335, if the score indicates a high risk, in step 340, the user may be prompted to enter authentication information.

In step 345, the mobile application and/or the backend computer program may retrieve the user's custom authentication information, and may validate the authentication information received from the user in step 340. For example, the mobile application and/or backend computer program may compare the entered authentication information to the stored custom authentication information.

If the entered additional information is valid, in step 320, the mobile application may present the landing screen.

If the entered authentication information is valid, in step 350, the mobile application may deny access to the landing page, or may restrict the functionality of the mobile application. For example, the mobile application may only allow viewing of information (e.g., balance information). In another embodiment, the mobile application may limit the types of transaction and/or transaction value that are available to the user.

In another embodiment, the user may be presented with secure login authentication in response to the user executing a transaction that may be determined by the machine learning model to be risky. For example, the mobile application may monitor the user's actions. When the user selects an action that has been identified by the user or the entity as requiring secure login authentication, such as a person-to-person payment, a transaction above a threshold amount, a change of password or contact information, etc., or if the machine learning model identifies the action as having high risk, the mobile application may require entry and validation of authentication information before the action is executed.

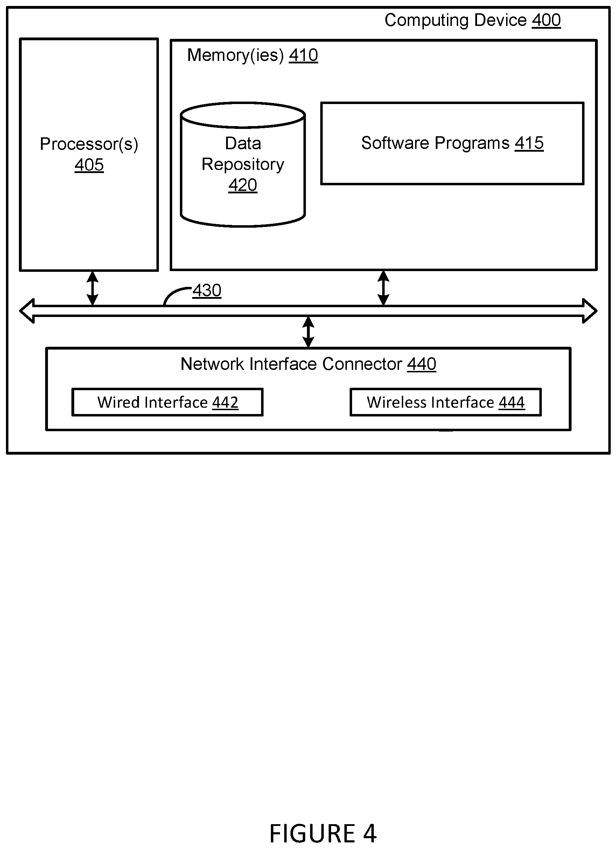

Figure 4 depicts an exemplary computing system for implementing aspects of the present disclosure. Figure 4 depicts exemplary computing device 400. Computing device 400 may represent the system components described herein. Computing device 400 may include processor 405 that may be coupled to memory 410. Memory 410 may include volatile memory. Processor 405 may execute computer-executable program code stored in memory 410, such as software programs 415. Software programs 415 may include one or more of the logical steps disclosed herein as a programmatic instruction, which may be executed by processor 405. Memory 410 may also include data repository 420, which may be nonvolatile memory for data persistence. Processor 405 and memory 410 may be coupled by bus 430. Bus 430 may also be coupled to one or more network interface connectors 440, such as wired network interface 442 or wireless network interface 444. Computing device 400 may also have user interface components, such as a screen for displaying graphical user interfaces and receiving input from the user, a mouse, a keyboard and/or other input/output components (not shown).

Hereinafter, general aspects of implementation of the systems and methods of embodiments will be described.

Embodiments of the system or portions of the system may be in the form of a "processing machine," such as a general-purpose computer, for example. As used herein, the term "processing machine" is to be understood to include at least one processor that uses at least one memory. The at least one memory stores a set of instructions. The instructions may be either permanently or temporarily stored in the memory or memories of the processing machine. The processor executes the instructions that are stored in the memory or memories in order to process data. The set of instructions may include various instructions that perform a particular task or tasks, such as those tasks described above. Such a set of instructions for performing a particular task may be characterized as a program, software program, or simply software.

In one embodiment, the processing machine may be a specialized processor.

In one embodiment, the processing machine may be a cloud-based processing machine, a physical processing machine, or combinations thereof.

As noted above, the processing machine executes the instructions that are stored in the memory or memories to process data. This processing of data may be in response to commands by a user or users of the processing machine, in response to previous processing, in response to a request by another processing machine and/or any other input, for example.

As noted above, the processing machine used to implement embodiments may be a general-purpose computer. However, the processing machine described above may also utilize any of a wide variety of other technologies including a special purpose computer, a computer system including, for example, a microcomputer, mini-computer or mainframe, a programmed microprocessor, a micro-controller, a peripheral integrated circuit element, a CSIC (Customer Specific Integrated Circuit) or ASIC (Application Specific Integrated Circuit) or other integrated circuit, a logic circuit, a digital signal processor, a programmable logic device such as a FPGA (Field-Programmable Gate Array), PLD (Programmable Logic Device), PLA (Programmable Logic Array), or PAL (Programmable Array Logic), or any other device or arrangement of devices that is capable of implementing the steps of the processes disclosed herein.

The processing machine used to implement embodiments may utilize a suitable operating system.

It is appreciated that in order to practice the method of the embodiments as described above, it is not necessary that the processors and/or the memories of the processing machine be physically located in the same geographical place. That is, each of the processors and the memories used by the processing machine may be located in geographically distinct locations and connected so as to communicate in any suitable manner. Additionally, it is appreciated that each of the processor and/or the memory may be composed of different physical pieces of equipment. Accordingly, it is not necessary that the processor be one single piece of equipment in one location and that the memory be another single piece of equipment in another location. That is, it is contemplated that the processor may be two pieces of equipment in two different physical locations. The two distinct pieces of equipment may be connected in any suitable manner. Additionally, the memory may include two or more portions of memory in two or more physical locations.

To explain further, processing, as described above, is performed by various components and various memories. However, it is appreciated that the processing performed by two distinct components as described above, in accordance with a further embodiment, may be performed by a single component. Further, the processing performed by one distinct component as described above may be performed by two distinct components.

In a similar manner, the memory storage performed by two distinct memory portions as described above, in accordance with a further embodiment, may be performed by a single memory portion. Further, the memory storage performed by one distinct memory portion as described above may be performed by two memory portions.

Further, various technologies may be used to provide communication between the various processors and/or memories, as well as to allow the processors and/or the memories to communicate with any other entity; i.e., so as to obtain further instructions or to access and use remote memory stores, for example. Such technologies used to provide such communication might include a network, the Internet, Intranet, Extranet, a LAN, an Ethernet, wireless communication via cell tower or satellite, or any client server system that provides communication, for example. Such communications technologies may use any suitable protocol such as TCP/IP, UDP, or OSI, for example.

As described above, a set of instructions may be used in the processing of embodiments. The set of instructions may be in the form of a program or software. The software may be in the form of system software or application software, for example. The software might also be in the form of a collection of separate programs, a program module within a larger program, or a portion of a program module, for example. The software used might also include modular programming in the form of object-oriented programming. The software tells the processing machine what to do with the data being processed.

Further, it is appreciated that the instructions or set of instructions used in the implementation and operation of embodiments may be in a suitable form such that the processing machine may read the instructions. For example, the instructions that form a program may be in the form of a suitable programming language, which is converted to machine language or object code to allow the processor or processors to read the instructions. That is, written lines of programming code or source code, in a particular programming language, are converted to machine language using a compiler, assembler or interpreter. The machine language is binary coded machine instructions that are specific to a particular type of processing machine, i.e., to a particular type of computer, for example. The computer understands the machine language.

Any suitable programming language may be used in accordance with the various embodiments. Also, the instructions and/or data used in the practice of embodiments may utilize any compression or encryption technique or algorithm, as may be desired. An encryption module might be used to encrypt data. Further, files or other data may be decrypted using a suitable decryption module, for example.

As described above, the embodiments may illustratively be embodied in the form of a processing machine, including a computer or computer system, for example, that includes at least one memory. It is to be appreciated that the set of instructions, i.e., the software for example, that enables the computer operating system to perform the operations described above may be contained on any of a wide variety of media or medium, as desired. Further, the data that is processed by the set of instructions might also be contained on any of a wide variety of media or medium. That is, the particular medium, i.e., the memory in the processing machine, utilized to hold the set of instructions and/or the data used in embodiments may take on any of a variety of physical forms or transmissions, for example. Illustratively, the medium may be in the form of a compact disc, a DVD, an integrated circuit, a hard disk, a floppy disk, an optical disc, a magnetic tape, a RAM, a ROM, a PROM, an EPROM, a wire, a cable, a fiber, a communications channel, a satellite transmission, a memory card, a SIM card, or other remote transmission, as well as any other medium or source of data that may be read by the processors.

Further, the memory or memories used in the processing machine that implements embodiments may be in any of a wide variety of forms to allow the memory to hold instructions, data, or other information, as is desired. Thus, the memory might be in the form of a database to hold data. The database might use any desired arrangement of files such as a flat file arrangement or a relational database arrangement, for example.

In the systems and methods, a variety of "user interfaces" may be utilized to allow a user to interface with the processing machine or machines that are used to implement embodiments. As used herein, a user interface includes any hardware, software, or combination of hardware and software used by the processing machine that allows a user to interact with the processing machine. A user interface may be in the form of a dialogue screen for example. A user interface may also include any of a mouse, touch screen, keyboard, keypad, voice reader, voice recognizer, dialogue screen, menu box, list, checkbox, toggle switch, a pushbutton or any other device that allows a user to receive information regarding the operation of the processing machine as it processes a set of instructions and/or provides the processing machine with information. Accordingly, the user interface is any device that provides communication between a user and a processing machine. The information provided by the user to the processing machine through the user interface may be in the form of a command, a selection of data, or some other input, for example.

As discussed above, a user interface is utilized by the processing machine that performs a set of instructions such that the processing machine processes data for a user. The user interface is typically used by the processing machine for interacting with a user either to convey information or receive information from the user. However, it should be appreciated that in accordance with some embodiments of the system and method, it is not necessary that a human user actually interact with a user interface used by the processing machine. Rather, it is also contemplated that the user interface might interact, i.e., convey and receive information, with another processing machine, rather than a human user. Accordingly, the other processing machine might be characterized as a user. Further, it is contemplated that a user interface utilized in the system and method may interact partially with another processing machine or processing machines, while also interacting partially with a human user.

It will be readily understood by those persons skilled in the art that embodiments are susceptible to broad utility and application. Many embodiments and adaptations of the present invention other than those herein described, as well as many variations, modifications and equivalent arrangements, will be apparent from or reasonably suggested by the foregoing description thereof, without departing from the substance or scope.

Accordingly, while the embodiments of the present invention have been described here in detail in relation to its exemplary embodiments, it is to be understood that this disclosure is only illustrative and exemplary of the present invention and is made to provide an enabling disclosure of the invention. Accordingly, the foregoing disclosure is not intended to be construed or to limit the present invention or otherwise to exclude any other such embodiments, adaptations, variations, modifications or equivalent arrangements.

## Claims

1. A method, comprising:
receiving, by a mobile application executed by a mobile electronic device, a login from a user;
determining, by the mobile application, that secure login authentication is required;
prompting, by the mobile application, the user for additional authentication information comprising a personal identification number or a passcode;
receiving, by the mobile application, the additional authentication information;
comparing, by the mobile application, the additional authentication information to stored authentication information; and
presenting, by the mobile application, a landing screen in response to the additional authentication information matching the stored authentication information.

2. The method of claim 1, wherein the login comprises a username and password login.

3. The method of claim 1, wherein the login comprises a biometric login.

4. The method of claim 1, wherein the step of determining that additional authentication is required comprises:
determining, by the mobile application, that additional authentication is in an always-on mode.

5. The method of claim 1, wherein the step of determining that additional authentication is required comprises:
determining, by the mobile application, a risk score for the login; and
determining, by the mobile application, that the additional authentication is required in response to the risk score being above a threshold.

6. The method of claim 5, wherein the mobile application uses a machine learning model to predict the risk score.

7. The method of claim 6, wherein the risk score is based on a geolocation of the mobile electronic device, historical user activity with the mobile electronic device, a type of login, a number of failed login attempts, a time of day, and/or a use of a public network.

8. The method of claim 7, wherein the secure login authentication is required when the mobile electronic device is outside of a registered area.

9. The method of claim 6, wherein the secure login authentication is required in response to a request for a transaction above a threshold amount.

10. The method of claim 1, further comprising:
receiving, by the mobile application, authentication information; and
storing, by the mobile application, the authentication information as stored authentication information.

11. A non-transitory computer readable storage medium, including instructions stored thereon, which when read and executed by one or more computer processors, cause the one or more computer processors to perform steps comprising:
receiving a login from a user;
determining that secure login authentication is required;
prompting the user for additional authentication information comprising a personal identification number or a passcode;
receiving the additional authentication information;
comparing the additional authentication information to stored authentication information; and
presenting a landing screen in response to the additional authentication information matching the stored authentication information.

12. The non-transitory computer readable storage medium of claim 11, wherein the login comprises a username and password login.

13. The non-transitory computer readable storage medium of claim 11, wherein the login comprises a biometric login.

14. The non-transitory computer readable storage medium of claim 11, wherein the step of determining that secure login authentication is required comprises instructions stored thereon, which when read and executed by the one or more computer processors, cause the one or more computer processors to perform steps including:
determining that additional authentication is in an always-on mode.

15. The non-transitory computer readable storage medium of claim 11, wherein the step of determining that secure login authentication is required comprises instructions stored thereon, which when read and executed by the one or more computer processors, cause the one or more computer processors to perform steps including:
determining a risk score for the login; and
determining that the secure login authentication is required in response to the risk score being above a threshold.

16. The non-transitory computer readable storage medium of claim 15, wherein a machine learning model is used to predict the risk score.

17. The non-transitory computer readable storage medium of claim 16, wherein the risk score is based on a geolocation of a mobile electronic device, historical user activity with the mobile electronic device, a type of login, a number of failed login attempts, a time of day, and/or a use of a public network.

18. The non-transitory computer readable storage medium of claim 17, wherein the secure login authentication is required when the mobile electronic device is outside of a registered area.

19. The non-transitory computer readable storage medium of claim 16, wherein the secure login authentication is required in response to a request for a transaction above a threshold amount.

20. The non-transitory computer readable storage medium of claim 11, further comprising instructions stored thereon, which when read and executed by the one or more computer processors, cause the one or more computer processors to perform steps including:
receiving authentication information; and
storing the authentication information as stored authentication information.
